# EUROPEAN PATENT APPLICATION

(11) **EP 3 045 488 A1**
(43) Date of publication of application: **20.07.2016**
(21) Application number: 15195130.8
(22) Date of filing: 18.11.2015
(51) Int. Cl.: C08G 73/10

(54) **POLYIMIDE COMPOSITIONS AND METHODS**

(30) Priority: 15.01.2015 US 201562103939 P
(71) Applicant: Rohm and Haas Electronic Materials LLC, Marlborough, MA 01752 (US); ROHM AND HAAS COMPANY, Philadelphia, PA 19106-2399 (US)
(72) Inventor: BU, Lujia, Southborough, MA Massachusetts 01772 (US); ZHOU, Fu, South Grafton, MA Massachusetts 01560 (US); KINZIE, Charles R., Boston, MA Massachusetts 02125 (US); LIU, Xiang-Qian, Collegeville, PA Pennsylvania 19426 (US)
(74) Representative: Houghton, Mark Phillip

(57) **Abstract**

Methods of manufacturing polyimides using a solvent system that is free of N-methylpyrrolidone are provided. Compositions useful in the deposition of polyimide films that are free ofN-methylpyrrolidone are also provided.

## Description

The present invention relates generally to the field of polyimides, and more particularly to solvents useful for the synthesis of polyimides and for forming polyimide compositions.

Polyimide polymers are particularly useful in a variety of applications, including the manufacture of electronic devices. Many suitable polyimide and polyamic acid polymers for use in the electronics industry are synthesized and/or formulated in solvents now classified as harmful such as N-methylpyrrolidone (NMP), dimethyformamide (DMF) and dimethylacetamide (DMAc). NMP is a particularly good solvent for certain polyimide or polyamic acid polymers, dissolving these polymers where other solvents cannot. However, NMP is a reproductive toxin, or repotoxin. In the electronics industry, many polymer applications require spin coating, slot-die coating or other deposition techniques where the polymers must remain in solution until the solvent is removed to cast a film, and the viscosity of such polymer compositions must be suitable for such deposition techniques. Such requirements limit available solvent options for polyimide or polyamic acid polymers.

Recently there has been much effort to find a suitable replacement for NMP as a solvent. Many of the suggested NMP replacements are homologous N-alkylpyrrolidones. International Patent Applications WO 2005/090447 and WO 2008/012231 disclose N-ethylpyrrolidone and 1,5-dimethylpyrrolidone, respectively, as NMP replacements. However, N-ethylpyrrolidone is now listed as a repotoxin, and 1,5-dimethylpyrrolidone is suspected of being repotoxic. U.S. Patent Application Publication Number 2007/0197720 discloses N-cycloalkylpyrrolidones as solvent replacements for NMP in polyurethane compositions. International Patent Application WO 2013/107822 discloses certain N-propyl-, N-butyl-, and N-pentyl-pyrrolidones as NMP replacements. Other NMP replacements include glymes such as polyglyme (poly(ethylene glycol) dimethyl ether) and ethyl diglyme (diethylene glycol diethyl ether), 1,3-dioxolane, dimethylsulfoxide (DMSO), and a blend of ethyl lactate and a fatty acid methyl ester derived from soya bean oil or corn oil. Many of the proposed NMP replacements themselves raise toxicity concerns. For example, the U.S. Environmental Protection Agency has recently promulgated a significant new use rule for certain glymes, including ethyl diglyme, due to toxicity concerns. Also, none of the proposed NMP replacements have the same solvating ability and other parameters possessed by NMP, limiting the usability of such replacements to certain materials or to certain applications. In particular, none of the proposed NMP replacements are suitable for use with polyimide and/or polyamic acid polymers used in the manufacture of electronic devices due to, among other reasons, their relatively high freeze point, relatively high viscosity, and relatively high boiling point, compared to NMP. There remains a need for a suitable solvent to replace NMP for use with polyimide polymers in the manufacture of electronic devices.

The present invention provides a composition comprising one or more polyimide polymers and/or polyamic acid polymers and a solvent mixture comprising dimethylsulfoxide, triethyl phosphate, and gamma-butyrolactone.

Also provided by the present invention is a process for preparing polyimide polymers comprising: reacting one or more dianhydride monomers with one or more diamines in a solvent system comprising dimethylsulfoxide, triethyl phosphate, and gamma-butyrolactone to form a polyamic acid polymer; and imidizing the polyamic acid polymer to form a polyimide polymer.

As used throughout this specification, the following abbreviations shall have the following meanings, unless the context clearly indicates otherwise: °C = degree Celsius; g = gram; L = liter; mL = milliliter; mm = millimeter; and DI = deionized. All amounts are percent by weight ("wt%") and all ratios are molar ratios, unless otherwise noted. All numerical ranges are inclusive and combinable in any order, except where it is clear that such numerical ranges are constrained to add up to 100%. The articles "a", "an" and "the" refer to the singular and the plural. As used herein, the term "and/or" includes any and all combinations of one or more of the associated listed items. "Solvent mixture" and "solvent system" are used interchangeably in this application. "Alkyl" refers to linear, branched and cyclic alkyl unless otherwise specified. "Aryl" refers to aromatic carbocycles and aromatic heterocycles. The term "polymer" includes oligomers. "Oligomer" refers to dimers, trimers, tetramers and other polymeric materials that are capable of further curing. By the term "curing" is meant any process, such as polymerization or condensation, that increases the molecular weight of a material or composition. "Curable" refers to any material capable of being cured under certain conditions. The terms "film" and "layer" are under interchangeably through this specification.

The inventors have found that a solvent mixture comprising dimethylsulfoxide (DMSO), triethyl phosphate (TEP), and gamma-butyrolactone (GBL) is particularly effective as a solvent for polyimide polymers and/or polyamic acid polymers. Particularly, the present invention provides a composition comprising one or more polyimide polymers and/or polyamic acid polymers and a solvent system comprising 10 to 80 wt% dimethylsulfoxide, 10 to 80 wt% triethyl phosphate, and 10 to 80 wt% gamma-butyrolactone, based on the total weight of solvent. Preferably, the solvent mixture useful in the present compositions comprises 20 to 60 wt% DMSO, 20 to 60 wt% TEP, and 20 to 60 wt% GBL, and more preferably 25 to 40 wt% DMSO, 25 to 40 wt% TEP, and 20 to 50 wt% GBL. Particularly suitable solvent mixtures are those having a DMSO/TEP/GBL weight ratio of 0.75-1.25/0.75-1.25/0.75-1.25, and preferably a ratio of 1/1/0.75-1. It is preferred that ≤ 40 wt% DMSO is used when it is required that the present solvent mixture be liquid at temperatures < 0 °C.

The present combination of solvents readily dissolves polyimide polymers and/or polyamic acid polymers, particularly those polyimide or polyamic acid polymers that are soluble in NMP but have limited to no solubility in other conventional solvents. Preferred are aromatic polyimide polymers and aromatic polyamic acid polymers. As used herein, the phrase "polyimide or polyamic acid polymers that are soluble in NMP" refers to those polyimide or polyamic acid polymers that when dissolved in NMP form a uniform phase that can pass through a 1 µm pore size filter. Polyimide polymers and polyamic acid polymers are typically composed of, as polymerized units, one or more dianhydride monomers and one or more diamine monomers. It is preferred that the polyimide polymers and/or polyamic acid polymers useful in the present invention comprise as polymerized units one or more aryl dianhydride monomers or alicyclic dianhydride monomers. It is further preferred that the polyimide polymers and/or polyamic acid polymers comprise as polymerized units one or more aryl diamine monomers. Even more preferably, the polyimide polymers and/or polyamic acid polymers comprise as polymerized units one or more aryl dianhydride monomers or alicyclic dianhydride monomers, and one or more aryl diamine monomers.

Preferred polyimide polymers and polyamic acid polymers comprise one or more dianhydride monomers of formula (1) or (2) 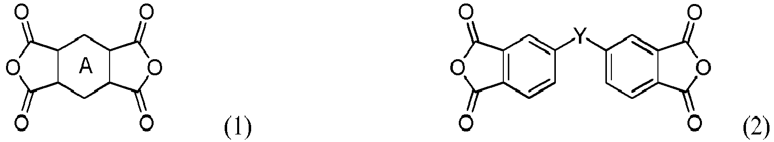 wherein A represents a cyclohexyl ring or a phenyl ring; Y is a chemical bond, O or CR₂; each R is independently H, CX₃, or C₂X₅; and each X is independently H or halogen. Preferred halogens are F, Cl and Br, and more preferably F. Preferably, A represents a phenyl ring. It is preferred that Y is a chemical bond, O, or C(CX₃)₂, and more preferably a chemical bond, O, or C(CF₃)₂. Suitable dianhydride monomers are generally commercially available, such as from Sigma-Aldrich (St. Louis, Missouri) or TCI America (Philadelphia, PA), or may be prepared by various methods known in the art. Preferred dianhydride monomers include: 4,4'-(hexafluoroisopropylidene)diphthalic anhydride; 4,4'-oxydiphthalic anhydride; 3,3',4,4'-biphenyltetracarboxylic dianhydride; 1,2,4,5-benzenetetracarboxylic dianhydride (pyromellitic dianhydride); 1,2,4,5-cyclohexyltetracarboxylic dianhydride; and naphthalene-1,4,5,8-tetracarboxylic dianhydride.

It is further preferred that the polyimide polymers and polyamic acid polymers comprise one or more aryl diamine monomers, and more preferably one or more aryl diamine monomers of formula (3) 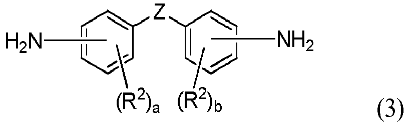 wherein Z is chosen from a chemical bond, O or C(R¹)₂; each R¹ is independently H, CX₃, or C₂X₅; each R² is independently CX₃ or C₂X₅; each X is independently H or halogen; and a and b are integers independently chosen from 0 to 2. Preferred halogens are F, Cl and Br, and more preferably F. R¹ is preferably CH₃ or CF₃. It is preferred that Z is a chemical bond, O, or C(CX₃)₂, and more preferably a chemical bond, O, or C(CF₃)₂. It is preferred that each R² is independently CH₃ or CF₃. Preferably each of a and b is 0 or 1. It is preferred that a + b = 0 or 2. Suitable diamine monomers are generally commercially available, such as from Sigma-Aldrich (St. Louis, Missouri) or TCI America (Philadelphia, PA), or may be prepared by various methods known in the art. Preferred diamine monomers include: o-tolidine; m-tolidine; 4,4'-oxydianiline; 4,4'-(hexafluoroisopropylidene)dianiline; and 2,2'-bis(trifluoromethyl)benzidine.

It is further preferred that the polyimide polymers and polyamic acid polymers of the invention comprise, as polymerized units, one or more dianhydride monomers of formula (1) or (2) and one or more diamine monomers of formula (3). Suitable polyimide polymers and polyamic acid polymers are generally commercially available, or may be prepared by various methods known in the art. For example, polyimide polymers are typically prepared by imidizing a polyamic acid polymer.

The present compositions may be prepared by combining the DMSO, TEP, GBL and the one or more polymers chosen from polyimide polymers, polyamic acid polymers, or a combination thereof, in any order. Preferably, the one or more polymers chosen from polyimide polymers, polyamic acid polymers, or a combination thereof are added to the solvent mixture. Alternatively, the polyimide polymers or polyamic acid polymers may be prepared in the solvent mixture, and the composition used as is. When the present compositions are used to deposit a polyimide or polyamic acid polymer film, the amount of the polymer in the composition typically ranges from 0.5 to 35% solids, and preferably from 1 to 35% solids.

The present compositions may optionally comprise one or more additional components, such as secondary organic solvents, surface leveling agents (or surfactants), curing agents, crosslinking agents, antioxidants, and the like. Preferably, the present compositions comprise one or more additional components chosen from surface leveling agents, curing agents, crosslinking agents and antioxidants, and more preferably from surface leveling agents, curing agents, and crosslinking agents. Any organic solvent may suitably be used as the secondary solvent, provided that such solvent does not negatively impact the solubility of the polyimide or polyamic acid polymer in the present solvent mixture or otherwise impair the performance of the composition for use in the manufacture of electronic devices. Suitable surface leveling agents include, but are not limited to, nonionic surfactants, amphoteric surfactants, anionic surfactants, and cationic surfactants, preferably nonionic, and more preferably polyalkylene oxides, such as silicone-polyether copolymers available under the SILWET brand (Momentive Performance Materials). Surface leveling agents are typically present in the compositions of the invention in an amount of from 0 to 10 wt%, preferably from 0 to 8 wt%, and more preferably from 0.05 to 2 wt%, based on the total weight of the composition. Suitable curing agents are any materials that promote curing of the polyimide and/or polyamic acid film, such as, but not limited to, inorganic polymerization catalysts, thermal acid generators (TAGs), photoacid generators (PAGs), and the like. TAGs and PAGs suitable for use as curing agents are well known in the art. The amount of such curing agents used in the present composition is convention in the art, such as from 0 to 10 wt%, based on the total weight of the composition. Any multifunctional monomer that polymerizes with the one or more polyimide and/or polyamic acid polymers may be used as a crosslinking agent in the present compositions. Such crosslinking agents are well known to those skilled in the art, such as bismaleimides. Crosslinking agents are typically used in an amount of from 0 to 10 wt%, based on the total weight of the composition. Alternatively, the polyimide and/or polyamic acid polymers may be end-capped with a cross-linking moiety, such as an alkynyl-containing moiety. A wide variety of such alkynyl-containing end-capping moieties are well-known in the art, such as those available under the NEXIMID brand (Nexam Chemical). Suitable alkynyl-containing end-capping moieties are disclosed in International Patent Applications WO 2011/128431 and WO 2012/131063, and in European Patents EP 2630115 B and EP 2653467 B. When polyimides and/or polyamic acid polymers having alkynyl-containing end capping moieties are used in the present compositions, such polymers may be crosslinked by heating. The present compositions are preferably free of N-alkylpyrrolidones, and more preferably free of N-methylpyrrolidone, and yet more preferably free of N-methylpyrrolidone and N-ethylpyrrolidone. It is further preferred that the present compositions are free of dimethylacetamide and dimethylformamide.

The present compositions are useful in manufacture of any electronic device utilizing polyimide polymers and/or polyamic acid polymers, such as in the formation of dielectric layers or electronic device substrates, such as flexible display substrates. The present compositions are particularly useful where transparency and high thermal stability are critical, such as in the manufacture of transparent flexible substrates and transparent touch screens for display applications. The present compositions may be coated on a substrate by any suitable means, such as spin-coating, slot-die coating, doctor blading, curtain coating, roller coating, spray coating, dip coating, and the like. Spin-coating and slot-die coating are preferred. In a typical spin-coating method, the present compositions are applied to a substrate which is spinning at a rate of 500 to 4000 rpm for a period of 15 to 90 seconds to obtain a desired layer of the polymer on the substrate. It will be appreciated by those skilled in the art that the height of the polymer layer may be adjusted by changing the spin speed, as well as the solids content of the composition.

A wide variety of substrates may be used in the present invention, such as: glass; packaging substrates such as multichip modules; flat panel display substrates; integrated circuit substrates; substrates for light emitting diodes (LEDs) including organic light emitting diodes (OLEDs); semiconductor wafers; polycrystalline silicon substrates; and the like. Such substrates are typically composed of one or more of silicon, polysilicon, silicon oxide, silicon nitride, silicon oxynitride, silicon germanium, gallium arsenide, aluminum, sapphire, tungsten, titanium, titanium-tungsten, nickel, copper, and gold. Suitable substrates may be in the form of wafers such as those used in the manufacture of integrated circuits, optical sensors, flat panel displays, integrated optical circuits, and LEDs. As used herein, the term "semiconductor wafer" is intended to encompass "an electronic device substrate," "a semiconductor substrate," "a semiconductor device," and various packages for various levels of interconnection, including a single-chip wafer, multiple-chip wafer, packages for various levels, or other assemblies requiring solder connections. Such substrates may be any suitable size. Preferred wafer substrate diameters are 200 mm to 300 mm, although wafers having smaller and larger diameters may be suitably employed according to the present invention. As used herein, the term "semiconductive substrates" includes any substrate having one or more semiconductor layers or structures which include active or operable portions of semiconductor devices. The term "semiconductor substrate" is defined to mean any construction comprising semiconductive material, including but not limited to bulk semiconductive material such as a semiconductive wafer, either alone or in assemblies comprising other materials thereon, and semiconductive material layers, either alone or in assemblies comprising other materials. A semiconductor device refers to a semiconductor substrate upon which at least one microelectronic device has been or is being batch fabricated.

After being coated on the substrate, the polyimide polymer and/or polyamic acid polymer layer is optionally soft-baked at a relatively low temperature to remove solvent and other relatively volatile components from the layer. Typically, the substrate is baked at a temperature of ≤ 200 °C, preferably from 100 to 200 °C, and more preferably from 100 to 150 °C. The baking time is typically from 10 seconds to 20 minutes, and preferably from 1 to 20 minutes. When the substrate is glass or a wafer, such baking step may be performed by heating the glass or wafer on a hot plate, or in an oven. Such soft-baking step may be performed as part of the curing step, or may be omitted altogether.

The polyimide polymer and/or polyamic acid polymer layer is then cured. The polymer layer is sufficiently cured such that the film does not intermix with a subsequently applied organic layer, such as a photoresist or other organic layer disposed directly on the polyimide and/or polyamic acid layer. The polyimide and/or polyamic acid layer may be cured in an oxygen-containing atmosphere, such as air, or in an inert atmosphere, such as nitrogen and under conditions, such as heating, sufficient to provide a cured film. Typically, such curing is performed by heating the polymer layer at a curing temperature of ≤ 450 °C, and preferably ≤ 375 °C. Such heating may be accomplished by any suitable means, such as by oven heating. Typically, a multi-step curing process or a ramped temperature curing process is used. Such multi-step and ramped temperature curing conditions are well-known to those skilled in the art. The curing time may be from 10 seconds to 10 hours, preferably from 1 minute to 2 hours and more preferably from 5 to 90 minutes; although longer or shorter curing times may be used, depending on the thickness of the polymer layer, the curing temperature used, and other parameters well-known to those skilled in the art. The choice of final curing temperature depends mainly upon the desired curing rate, with higher curing temperatures requiring shorter curing times. Once cured, the polyimide films or polyamic acid films may be subjected to various processing conditions used in the manufacture of electronic devices, such as etching, metallization, and the like.

Typically, one or more dianhydride monomers are reacted with one or more diamine monomers to prepare a polyamic acid polymer. The polyamic acid polymer is then imidized to form a polyimide polymer. Preferred dianhydride monomers and diamine monomers are discussed above. The present solvent mixture may be used as an NMP replacement in the synthesis of polyamic acid polymers and/or polyimide polymers. In particular, polyimide polymers may be prepared by: reacting one or more dianhydride monomers with one or more diamine monomers in a solvent mixture comprising dimethylsulfoxide, triethyl phosphate, and gamma-butyrolactone to form a polyamic acid polymer; and imidizing the polyamic acid polymer to form a polyimide polymer. The DMSO, TEP, GBL, one or more dianhydride monomers, and one or more diamine monomers may be combined in any order. It is preferred that the diamine is added to the solvent mixture, followed by addition of the dianhydride, or alternatively, that the diamine and dianhydride are simultaneously added to the solvent mixture. Preferably, the solvent mixture comprises 10 to 80 wt% dimethylsulfoxide, 10 to 80 wt% triethyl phosphate, and 10 to 80 wt% gamma-butyrolactone. It is preferred that at least one diamine monomer is an aryl diamine monomer. It is further preferred that at least one dianhydride monomer is an aryl dianhydride monomer or an alicyclic dianhydride monomer. Following preparation of the polyamic acid or polyimide polymer, the polymer may be used as-is or may be optionally purified such as by precipitating the polymer from the reaction mixture, optionally drying the polymer, and re-dissolving the polymer in a solvent mixture comprising 10 to 80 wt% dimethylsulfoxide, 10 to 80 wt% triethyl phosphate, and 10 to 80 wt% gamma-butyrolactone.

The present solvent mixture is suitable as a replacement for NMP for formulating polyimide polymers and/or polyamic acid polymers for use in the manufacture of electronic devices and substrates for use in electronic devices, as well as a replacement for NMP used in the synthesis of polyamic acid and polyimide polymers.. This solvent mixture provides polyimide and/or polyamic acid compositions having appropriate viscosity to allow polyimide and/or polyamic acid film deposition by spin-coating techniques.

Example 1. A 250 mL three-neck round bottom flask was charged with 130 mL anhydrous DMAc and 18.00 g (40.52 mmol) 4,4'-(hexafluoroisopropylidene)diphthalic anhydride (6FDA) with mechanical stirring under nitrogen atmosphere at room temperature. Once the 6FDA was completely dissolved, 12.98 g (40.52 mmol) 2,2'-bis(trifluoromethyl)benzidine (22TFMB) was added and the reaction was allowed to continue stirring at room temperature for 48 hours resulting in a viscous polyamic acid solution (15% solids).

Example 2. The polyamic acid solution from Example 1 was imidized by adding 8.27 g (81.04 mmol) acetic anhydride and then 8.20 g (81.04 mmol) triethylamine directly to the solution. This was allowed to mix for 16 hours at room temperature. Once imidization was complete, the resulting polyimide was precipitated by pouring the reaction mixture into 650 mL of stirring absolute ethanol. A white, fibrous solid precipitate was collected via vacuum filtration. This collected precipitate was rinsed in 200 mL of stirring absolute ethanol and vacuum filtered a second time. Next, the collected solids were dried under vacuum at 60 °C for 24 hours.

Example 3. Polyamic acid from Example 1 was thermally imidized as follows. The polyamic acid solution from Example 1 was spin-coated on 7.5 x 7.5 cm (3 x 3 inch) piece of Eagle glass (from Coming, Inc.) at 300 rpm for 30 seconds, followed by 1000 rpm for 60 seconds. The coated glass piece was placed on a 110 °C hot plate for 15 minutes for soft baking to remove residual solvent. The soft baked film was next cooled to room temperature and then cured at 340 °C for 60 minutes yielding a 10 µm thick polyimide film on the glass substrate. The sample was submerged in dilute ammonium hydroxide (approximately 3.5 wt% in DI water) and heated to 70 °C for 5 minutes to separate the polyimide film from the glass substrate. The isolated polyimide was placed in a vacuum oven and dried at 60 °C for 24 hours.

Example 4. The dried solid polyimide from Example 3 (7.50 g) was dissolved in 22.5 g of a mixture of DMSO/TEP/GBL (35:35:30 weight ratio) containing 0.15 wt% of a silicone-polyether copolymer as a surface leveling agent. After the polyimide had completely dissolved, the composition was filtered through a 1 µm pore size filter, degassed, and then spin-coated on 7.5 x 7.5 cm Eagle glass substrates using the spin coating conditions from Example 3. The coated glass plate was placed on a 110 °C hot plate for 15 minutes for soft baking. The soft baked film was next cooled to room temperature and then cured at 340 °C for 60 minutes yielding a 10 µm thick polyimide film on the glass substrate. The sample was submerged in dilute ammonium hydroxide (approximately 3.5 wt%) and heated to 70 °C for 5 minutes to separate the polyimide film from the glass substrate. The film was placed in a vacuum oven and dried at 60 °C for 24 hours. This example demonstrated the ability of the DMSO/TEP/GBL solvent mixture to dissolve polyimide.

Example 5: Comparative. The procedure of Example 1 was repeated except that the DMAc was replaced with a similar amount of NMP. The resulting polyamic acid in NMP was then imidized according to the procedure of Example 2 to provide a fully dissolved polyimide in the NMP. Solid polyimide was obtained by precipitating the polyimide according to the procedures of Example 2.

Example 6: Comparative. A mixture of DMSO/GBL (1:1 weight ratio) was evaluated for suitability for formulating polyimide polymers. A sample of this solvent mixture was stored in a -20 °C freezer. After 2 hours, the solvent mixture solidified, making it unsuitable for the synthesis and formulation of polyimide polymers for the electronics industry where low temperature storage conditions are typically used.

Example 7. A mixture of DMSO/TEP/GBL (35:35:30 weight ratio) was evaluated for suitability for formulating polyimide. A sample of this solvent mixture was stored in a -20 °C freezer. After 24 hours, the solution remained entirely liquid.

Example 8. The procedure of Example 1 was repeated using a mixture of DMSO/TEP/GBL (35:35:30 weight ratio) in place of DMAc.

Example 9. The polyamic acid from Example 8 was imidized according to the general procedure of Example 2, except that a mixture of DMSO/TEP/GBL (35:35:30 weight ratio) was used in place of DMAc. The viscosity of the resulting polyimide solution had a measured viscosity similar to the polyimide solutions obtained from DMAc or NMP.

Example 10: Comparative. The procedure of Example 1 was repeated, except that the DMAc was replaced with a commercially available NMP replacement, TamiSolve® NxG solvent (from Taminco), which is believed to be a N-C₃₋₅alkylpyrrolidone. The viscosity resulting polyamic acid solution was high (gel-like) and required dilution with an additional amount of TamiSolve® NxG solvent prior to spin-coating a polyamic acid film on a glass substrate. After spin-coating, the polyamic acid film appeared very hazy and nearly opaque in appearance.

Example 11: Comparative. The procedure of Example 1 was repeated, except that the DMAc was replaced with a commercially available NMP replacement, Rhodiasolve® PolarClean solvent (from Solvay). The viscosity resulting polyamic acid solution was very high (gel-like) and required dilution with an additional amount of Rhodiasolve® PolarClean solvent prior to spin-coating a polyamic acid film on a glass substrate. The polyamic acid film was soft baked on a hot plate at 100 °C for 60 minutes, after which time the film did not fully dry, indicating the presence of residual solvent.

Example 12. Four samples of polyimide films were prepared by combining 80 g of solvent and 9.77 g pyromellitic anhydride (PMDA) in each of 4 glass vials. The solvents used were NMP (Sample 1), TamiSolve® NxG (Sample 2), Rhodiasolve® PolarClean (Sample 3), and DMSO/TEP/GBL 35:35:30 by weight (Sample 4). The vials were rolled overnight to dissolve the PMDA. Next, 6.67 g of 4,4'-oxydianiline (ODA) and 3.55 g of 2,2'-bis(trifluoromethyl)benzidine (22TFMB) were added to each vial, and the vials were again rolled overnight. Films of each sample were then spin-coated on separate 7.5 x 7.5 cm (3 x 3 inch) pieces of Eagle glass (from Coming, Inc.). Sample 1 was a control, Samples 2 and 3 were comparative, and Sample 4 was inventive. Samples 1 and 4 were spin-coated at 450 rpm/60 seconds. Sample 2 was spin-coated at 300 rpm/30 seconds followed by 800 rpm/60 seconds, and Sample 3 was Sample 3 was spin-coated at 300 rpm/30 seconds followed by 1000 rpm/60 seconds. Each film sample was soft-baked at 110 °C for 15 minutes for films from Samples 1, 2 and 4, and for 30 minutes for the film from Sample 3. Next, the soft-baked films were cured under nitrogen for 60 minutes at 340 °C using a conveyor furnace.

Each polyimide film was analyzed using a BYK haze-gard *plus* C transparency meter. The meter was calibrated with BYK haze standard H 10 (Cat.-No.: 4742) and BYK transmittance standard (Cat.-No.: 4753) according to the instrument's manual. Measurements were performed by placing a polyimide film coated glass plate with the uncoated side flat on the instrument haze port. The measured haze numbers are reported in Table 1. As can be seen from the data in Table 1, polyimide films cast from conventional NMP replacement solvents show significant haze as compared to the polyimide film cast from NMP. In contrast, the polyimide film cast from the present solvent mixture has a haze value substantially similar to the polyimide film cast from NMP, and significantly less haze than the polyimide films cast from Samples 2 and 3.

**Table 1**

| **Polyimide Film** | **Haze No.** |
|---|---|
| Sample 1 (Control) | 0.14 |
| Sample 2 (Comparative) | 92.5 |
| Sample 3 (Comparative) | 1.22 |
| Sample 4 (Invention) | 0.21 |

Example 13. The procedure of Example 4 is repeated except that the amounts of DMSO, TEP and GBL are varied as shown in Table 2.

**Table 2**

| **Sample** | **DMSO (wt%)** | **TEP (wt%)** | **GBL (wt%)** |
|---|---|---|---|
| 13-1 | 35 | 30 | 35 |
| 13-2 | 40 | 35 | 25 |
| 13-3 | 30 | 35 | 35 |
| 13-4 | 35 | 25 | 40 |

Example 14: The procedure of Example 9 is repeated except that a mixture of DMSO/TEP/GBL in a weight ratio of 35/30/35 is used.

Example 15: The procedure of Example 1 is repeated except that DMSO/TEP/GBL solvent mixtures, dianhydride monomers and diamine monomers reported in Table 3 are used. The following abbreviations are used in Table 3: ODPA = 4,4'-oxydiphthalic anhydride; BPDA = 3,3',4,4'-biphenyltetracarboxylic dianhydride; PMDA = 1,2,4,5-benzenetrtracarboxylic dianhydride; 6FIPDA = 4,4'-(hexafluoroisopropylidene)dianiline; and ODA = 4,4'-oxydianiline.

**Table 3**

| **Sample** | **DMSO/TEP/GBL (weight ratio)** | **Dianhydride Monomer** | **Diamine Monomer** |
|---|---|---|---|
| 15-1 | 35/35/30 | ODPA | 22TFMB |
| 15-2 | 35/35/30 | ODPA | 6FIPDA |
| 15-3 | 35/30/35 | BPDA | 3-tolidine |
| 15-4 | 40/35/25 | PMDA | ODA |
| 15-5 | 35/25/40 | BPDA | ODA |
| 15-6 | 35/35/30 | 6FDA | 3-tolidine |

## Claims

1. A composition comprising one or more polyimide polymers and/or polyamic acid polymers and a solvent mixture comprising dimethylsulfoxide, triethyl phosphate, and gamma-butyrolactone.

2. The composition of claim 1 wherein the solvent mixture comprises 10 to 80 wt% dimethylsulfoxide, 10 to 80 wt% triethyl phosphate, and 10 to 80 wt% gamma-butyrolactone.

3. The composition of claim 2 wherein the solvent mixture comprises 20 to 60 wt% dimethylsulfoxide, 20 to 60 wt% triethyl phosphate, and 20 to 60 wt% gamma-butyrolactone.

4. The composition of claim 3 wherein the solvent mixture comprises 25 to 40 wt% dimethylsulfoxide, 25 to 40 wt% triethyl phosphate, and 20 to 50 wt% gamma-butyrolactone.

5. The composition of claim 1 wherein the solvent mixture comprises dimethylsulfoxide, triethyl phosphate, and gamma-butyrolactone in a weight ratio of 1/1/0.75-1.

6. The composition of claim 1 wherein the polyimide polymer and/or polyamic acid polymer is soluble in N-methylpyrrolidone.

7. The composition of claim 1 wherein the composition is free of N-methylpyrrolidone.

8. The composition of claim 1 wherein the composition is free of N-alkylpyrrolidone.

9. The composition of claim 8 wherein the composition is free of dimethylacetamide and dimethylformamide.

10. A process for preparing polyimide polymers comprising: reacting one or more dianhydride monomers with one or more diamine monomers in a solvent mixture comprising dimethylsulfoxide, triethyl phosphate, and gamma-butyrolactone to form a polyamic acid polymer; and imidizing the polyamic acid polymer to form a polyimide polymer.

11. The process of claim 10 wherein the solvent mixture comprises 10 to 80 wt% dimethylsulfoxide, 10 to 80 wt% triethyl phosphate, and 10 to 80 wt% gamma-butyrolactone.

12. The process of claim 10 wherein at least one diamine monomer is an aryl diamine monomer.

13. The process of claim 10 wherein at least one dianhydride monomer is an aryl dianhydride monomer or an alicyclic dianhydride monomer.
